# EUROPÄISCHE PATENTSCHRIFT

(11) **EP 2 284 083 B1**
(45) Veröffentlichungstag und Bekanntmachung des Hinweises auf die Patenterteilung: **05.06.2013**
(21) Anmeldenummer: 10171551.4
(22) Anmeldetag: 02.08.2010
(51) Int. Cl.: B65B 35/50, B65G 57/112, B65B 25/14

(54) **Verfahren und Vorrichtung zum Stapeln von Produkten**
Method and device for stacking products
Procédé et dispositif pour empiler des objets

(30) Priorität: 03.08.2009 DE 102009035890
(43) Veröffentlichungstag der Anmeldung: 16.02.2011
(73) Patentinhaber: Langhammer GmbH, 67304 Eisenberg (DE)
(72) Erfinder: Schmitt, Georg, 67281 Kirchheim (DE); Stollhof, Karlheinz, 67814 Dannenfels (DE)
(74) Vertreter: Hörschler, Wolfram Johannes

(56) Entgegenhaltungen:
- EP-A1- 0 627 372
- EP-A2- 1 852 354
- WO-A1-88/07003
- WO-A1-2007/088567
- DE-A1- 2 852 741
- US-A- 3 455 085

## Beschreibung

### Technisches Gebiet

Die Erfindung bezieht sich auf eine Vorrichtung zum Stapeln, insbesondere zum schnellen Stapeln von in einer Ebene sequenziell hintereinander geförderten Produkten. Grundsätzlich können die Produkte beliebiger Art sein. Im vorliegenden Zusammenhang kann, ohne Beschränkung weiterer möglicher Ausgestaltungen, unter den Produkten insbesondere eine Vielzahl von zum Beispiel durch eine Plastikfolie miteinander gepackten Tissueartikeln verstanden werden. Auf diese Ausgestaltung wird im Folgenden im Wesentlichen Bezug genommen. Dabei kann es sich bei den Tissueartikeln insbesondere um WC-Papierrollen, um nebeneinander gestapelte Küchenrollen, Papiertaschentücher oder dergleichen handeln. Die erfindungsgemäß vorgeschlagene Vorrichtung kommt an Palettiervorrichtungen und dergleichen zum Einsatz, mit denen einzelne Produkte zu Gruppen von Produkten insbesondere zusammengestellt, zusammengeschoben, ausgerichtet oder gruppiert werden.

### Stand der Technik

Aus WO 2004/014730 A1 ist ein Verfahren und eine Vorrichtung zur Verpackung von Produkten bekannt. Gemäß dieser Lösung erfolgt das Verpacken von Produkten mit Hilfe eines Sauggreifers, der das zu behandelnde Produkt ansaugt. Der Sauggreifer mit einer Anzahl von Saugern, die in der Horizontalen angeordnet sind, sowie mindestens ein Sauger, der in der Vertikalen angeordnet ist, sind an einem Greiferarm aufgenommen, der sowohl lateral als auch in vertikaler Richtung, d.h. in Z-Richtung bewegbar ist. Bei dieser Lösung ist zum sicheren Ergreifen und anschließenden Verpacken eines Produktes das Anlegen von Unterdruck erforderlich, welcher den Saugern, die an der Unterseite des Greifarms angeordnet sind, aufgegeben werden muss.

EP 0 629 573 B1 bezieht sich auf eine Zuführvorrichtung zur Aufnahme und Zufuhr von Artikeln. Auch bei dieser Lösung erfolgt die Aufnahme von Produkten mittels Saugern, die am unteren Ende eines in Z-Richtung bewegbaren Greiferarmes angeordnet sind. Der Greiferarm ist daneben in einer X-Y-Ebene bewegbar und kann, wie den Zeichnungen der EP 0 629 573 B1 entnommen werden kann, in dieser Ebene auch verfahren werden. Auch gemäß dieser Lösung erfolgt das Ergreifen von Produkten mittels durch eine Unterdruckquelle beaufschlagte Sauger, die an der Unterseite des in Z-Richtung auf und ab bewegbaren und innerhalb der X-Y-Arbeitsebene verfahrbaren Greiferarms aufgenommen sind.

Es hat sich herausgestellt, dass bei hohen Leistungen, die von den die genannten Produkte verarbeitenden Palettiervorrichtungen heutzutage erwartet werden, das Aufbauen von Unterdruck zum sicheren Konfektionieren, Gruppieren und Sortieren von Artikeln ein Geschwindigkeitshemmnis darstellt. Dies findet seine Ursache darin, dass der Aufbau des Unterdrucks und der Zusammenbruch desselben eine bestimmte Zeitspanne erfordert.

Diese Zeitspanne, die zum Auf- bzw. Abbau des Unterdruckes bei Lösungen gemäß des Standes der Technik erforderlich ist, hemmt die erreichbare Produktivität einer Palettiervorrichtung nicht unerheblich.

### Darstellung der Erfindung

Der Erfindung liegt die Aufgabe zugrunde, die Produktivität einer Palettiervorrichtung durch eine dieser vorschaltbare oder in diese integrierbare Vorrichtung mit hoher Stapelgeschwindigkeit zu verbessern.

Erfindungsgemäß wird vorgeschlagen, an einer Palettiervorrichtung im Rahmen der Zuführung der Produkte eine Vorrichtung anzuordnen, die einen kontinuierlichen Produktstrom auf einem Förderstrang transportiert oder mittels einer Weiche auf zwei Stränge verteilt und eine Stapelvorrichtung umfasst, in der aufgrund der Schwerkraft eine Vorgruppierung der Produkte in Stapelform erfolgt.

Bei den Produkten, bei denen es sich insbesondere um Tissueartikel, seien es Küchenrollen, sei es WC-Papier, seien es Hygieneartikel, seien es Papiertaschentücher oder dergleichen, handeln kann, kann aufgrund von deren geringem Gewicht eine Fallhöhe von bis zu einem halben Meter in eine schachtförmige Vertiefung in Kauf genommen werden, ohne dass es zu einer erwähnenswerten Beeinträchtigung der Produktqualität solcher Produkte kommt. In einer Ausführungsvariante können die zuvor gruppenweise aus einer kontinuierlichen Zufuhr z.B. in Zweier-, Dreier- oder Viererpaketen auf zwei nebeneinander liegende Stränge aufgeteilten Produkte im Schacht durch Anstellung einer Rampe in einem Rampenwinkel übereinander liegend gruppiert werden. Aufgrund einer nur geringen Fallhöhe und aufgrund der Wirkung der Schwerkraft, werden in einer schachtförmigen Vertiefung, gebildet durch den Anstellwinkel und abhängig vom Rampenwinkel einer z.B. geteilt ausgebildeten Rampe, die in Stränge in Zweier-, Dreier- oder Vierergruppen vereinzelten Produkte übereinandergestapelt. Die Ausrichtung der im Schacht übereinanderliegend in Stapelform gruppierten Produkte wird einerseits durch die schachtförmige Vertiefung seitlich begrenzende, in horizontale Richtung verfahrbare Schieber und andererseits durch eine stationäre Trennwand, die z.B. mittig im Schacht aufgenommen sein kann, gewährleistet. In einer Ausführungsform kann die angestellte Rampe geteilt ausgebildet sein, bei zwei nebeneinanderliegend geführten Strängen; sie kann jedoch auch ungeteilt ausgebildet sein und in einen einzigen Förderstrang integriert sein.

Die seitlich angeordneten Schieber, sind mit Anschlägen versehen, gegen welche die übereinander geförderten Produkte mit ihrer Vorderkante anliegen, so dass eine kantengenaue Bildung von Stapeln in Zweier-, Dreier- oder Viererlagen der Produkte übereinander erfolgt.

Die Bildung der Zweier-, Dreier- oder Viererstapel in der schachtartigen Vertiefung hinter der angestellten Rampe erfolgt in alternierender Abfolge. Dies bedeutet, dass zunächst hinter einem Abschnitt der angestellten Rampe, in einem ersten Strang ein Zweier-, Dreier- oder Viererstapel von Produkten erstellt wird und anschließend die Stapelbildung im nebenliegenden Abschnitt, d.h. auf der anderen Seite der stationär angeordneten Trennwand erfolgt. Dabei ist zunächst unerheblich, ob die Produkte in Zweier-, Dreier- oder V iererlagen übereinanderliegend angeordnet werden.

Sobald ein Stapel von Produkten fertiggestellt ist, verfährt der diesen seitlich abstützende Schieber in horizontale Richtung, so dass der Anschlagwinkel, der an der Innenseite, d.h. auf der dem gebildeten Stapel zuweisenden Seite des Schiebers angeordnet ist, nach außen zurückfährt und der Vorschub des Stapels in Förderrichtung freigegeben ist. Zur gleichen Zeit, während der die Freigabe des zuvor gebildeten Stapels erfolgt, wird auf der gegenüberliegenden Seite der Trennwand ein zweiter Stapel aus Produkten in zwei, drei oder vier Lagen, je nach Fallhöhe der Produkte aufgebaut. Die Freigabe der alternierend hinter der geteilten Rampe in der schachtartigen Vertiefung aufgebauten Produkte erfolgt ebenso in alternierender Weise, so dass ein kontinuierlicher Strom gestapelt in Zweier-, Dreier- oder Viererlagen übereinandergestapelter Produkte die schachtartige Vertiefung verlässt und ein kontinuierlicher Produktstrom auf Fördermitteln, so zum Beispiel Gurtförderern nach der Stapelbildung erfolgt.

Die aus der erfindungsgemäß vorgeschlagenen, beispielsweise einer Palettiervorrichtung vorgeschalteten und/oder in diese integrierten Stapelvorrichtung austretenden vorgestapelten Produkte werden anschließend über einen Parallelgreifer in einer sich in XY-Richtung erstreckenden Arbeitsebene gruppiert, um entsprechend von Setzmustern lageweise auf Paletten, insbesondere Europaletten, die Lkw-transportfähig sind, aufgebaut zu werden. Dies erfolgt über die Palettiervorrichtung, deren Parallelgreifer außer in der XY-Ebene verfahrbar ist, auch in Z-Richtung, d.h. in vertikale Richtung bewegt wird.

### Kurze Beschreibung der Zeichnung

Anhand der Zeichnung wird die Erfindung nachstehend eingehender beschrieben.

Es zeigt:
- Figur 1: eine Seitenansicht der erfindungsgemäß vorgeschlagenen Stapelvorrichtung,
- Figur 2: eine Draufsicht auf die in Figur 1 dargestellte Stapelvorrichtung,
- Figuren 3 bis 8: die Vereinzelung von Produkten in einem ersten Strang,
- Figuren 9 bis 14: das Bilden eines ersten Stapels bei gleichzeitiger Vereinzelung von Produkten in einem zweiten Strang,
- Figuren 15 bis 20: die Bildung des zweiten Stapels in der Vertiefung hinter der angestellten Rampe,
- Figuren 21 und 22: das Ausfahren des zweiten Stapels aus der schachtartigen Vertiefung hinter der geteilten Rampe und den Aufbau des dritten Stapels hinter der geteilten Rampe,
- Figuren 23 und 24: den Abschluss der Bildung des dritten Stapels und den Beginn der Vereinzelung zur Bildung eines vierten Stapels,
- Figuren 25 und 26: eine weitere Stapelaufbausequenz.

### Ausführungsvarianten

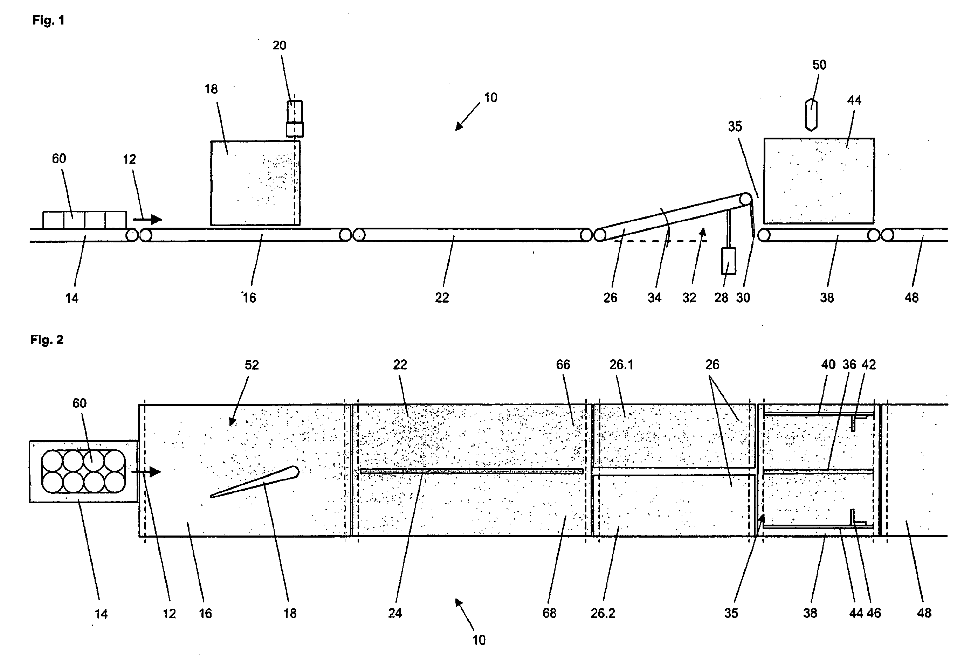

Der Darstellung gemäß Figur 1 ist eine Ausführungsvariante der erfindungsgemäß vorgeschlagenen Vorrichtung zum schnellen Stapeln von Produkten zu entnehmen. Bei der in Figur 1 in der Seitenansicht und in Figur 2 in der Draufsicht dargestellten Stapelvorrichtung handelt es sich um eine solche, die einer Palettiervorrichtung vorgeschaltet ist und die Teil einer Zuführvorrichtung von Produkten zur Palettiervorrichtung ist. Es besteht andererseits jedoch auch die Möglichkeit, die in den Figuren 1 und 2 mit ihren wesentlichen Komponenten dargestellte Stapelvorrichtung in den Palettierer bzw. in dessen Rahmenkonstruktion zu integrieren.

Ausgehend von der Darstellung gemäß Figur 1, welche eine Seitenansicht der erfindungsgemäß vorgeschlagenen Stapelvorrichtung darstellt, und der Figur 2, die eine Draufsicht auf dieselbe darstellt, umfasst eine Stapelvorrichtung 10 eine Anzahl von Fördereinrichtungen, bei denen es sich zum Beispiel um Gurtförderer handeln kann. Die Fördereinrichtungen 14, 16, 22, 26, 38 und 48 können, wie aus der Darstellung gemäß Figur 2 hervorgeht, vollflächig ausgebildet sein oder z.B. wie eine geteilt ausgebildete Rampe 26, die durch anstellbare Fördereinrichtungen 26.1, 26.2 gebildet ist, beschaffen sein.

Aus der Darstellung gemäß Figur 1 geht hervor, dass die Stapelvorrichtung 10 eine erste Fördereinrichtung 14 enthält, an den sich eine zweite, eine doppelte Breite aufweisende Fördereinrichtung 16 anschließt. Dieser ist eine Weiche 18 zugeordnet, die mittels eines Stellantriebes 20 in eine erste Weichenposition 52 und in eine zweite Weichenposition 54 und umgekehrt verstellbar ist. Bei dem Stellantrieb 20 kann es sich sowohl um einen Pneumatikzylinder als auch um einen Elektroantrieb handeln. An die zweite Fördereinrichtung 16 schließt sich eine dritte Fördereinrichtung 22 an, die mittig durch eine stationäre Trennwand 24 in einen ersten Strang 66 und einen zweiten Strang 68 geteilt ist, die in der Ebene der dritten Fördereinrichtung 22 liegen.

In den in den Figuren 1 und 2 dargestellten Ausführungsvarianten der erfindungsgemäß vorgeschlagenen Lösung ist die Rampe 26 geteilt ausgebildet und umfasst Fördereinrichtungen 26.1 sowie 26.2. Während die in den Figuren 1 und 2 dargestellte Fördereinrichtung einen ersten Strang 66 und einen zweiten Strang 68 umfasst, kann die erfindungsgemäß vorgeschlagene Fördereinrichtung 10 auch lediglich einsträngig ausgebildet sein, was mit einem Verzicht auf die schwenkbare Weiche 18 und den dieser zugeordneten Stellantrieb 20 hinausliefe. Alternativ zu den in Figuren 1 und 2 dargestellten Ausführungsvarianten könnte anstelle einer geteilt ausgebildeten Rampe 26 mit ihren Fördereinrichtungen 26.1, 26.2 auch die dritte Fördereinrichtung 22 geteilt ausgebildet sein und analog zur geteilt ausgebildeten Rampe 26 einen ersten Rampenteil 26.1 und einen zweiten Rampenteil 26.2 aufweisen, die jedoch nicht anstellbar sind, da sie in einer im Wesentlichen planförmig verlaufenden Förderebene für die Produkte liegen.

An die dritte Fördereinrichtung 22 schließt sich in Förderrichtung 12 der Produkte gesehen, eine in dieser Ausführungsvariante geteilt ausgebildete Rampe 26 an. Die hier geteilt ausgebildete Rampe 26 umfasst zum Beispiel zwei Gurtförderer, von denen einer dem ersten Strang 66 und der andere dem zweiten Strang 68 zugeordnet ist. Wie aus der Darstellung gemäß Figur 1 hervorgeht, ist die in dieser Ausführungsvariante geteilt ausgebildete Rampe 26 in einem Anstellwinkel 34 in eine angestellte Position 32 verfahren. Das Verfahren der geteilt ausgebildeten Rampe 26 in die angestellte Position 32 kann über einen Stellzylinder 28 auf pneumatischem Wege erfolgen, es besteht jedoch auch die Möglichkeit, die geteilt ausgebildete Rampe 26 in ihre angestellte Position 32 mittels einer Handkurbel, einer Zahnstange oder dergleichen auf manuellem Wege einzustellen. Wie aus der Darstellung gemäß Figur 1 des Weiteren hervorgeht, umfasst die hier geteilt ausgebildete Rampe 26 eine Abschirmung 30, die sich in etwa senkrecht vor einer schachtartigen Vertiefung 35, die durch die Anstellung 32 der in dieser Ausführungsvariante geteilt ausgebildeten Rampe 26 gebildet wird, erstreckt.

Der Boden der schachtartigen Vertiefung 35, die durch die angestellte Position 32 der geteilt ausgebildeten Rampe 26 entsteht, wird durch eine vierte Fördereinrichtung 38 gebildet. Je nach Anstellwinkel 34, welchen die geteilt ausgebildete Rampe 26 in der angestellten Position 32 einnimmt, entsteht eine Falltiefe, um welche die Produkte in die schachtartige Vertiefung 35 aufgrund der Schwerkraft hinabfallen und auf die Oberseite der vierten Fördereinrichtung 38 auftreffen. Seitlich ist die schachtartige Vertiefung 35 durch einen verfahrbaren ersten Schieber 40 sowie einen verfahrbaren zweiten Schieber 44 begrenzt. Der erste und der zweite Schieber 40, 44 ist mittels eines Linearantriebs 50 bewegbar. Die Schieber 40 bzw. 44 führen Freigabebewegungen 62, 64 in horizontale Richtung aus, wie nachfolgend noch eingehender beschrieben werden wird.

An den Innenseiten des ersten Schiebers 40 bzw. des zweiten Schiebers 44 erstrecken sich jeweils in vertikale Richtung in die Zeichenebene Anschlagwinkel 42 bzw. 46. Diese bilden Produktanschläge, an denen sich die in die schachtförmigen Vertiefung 35 geförderten Produkte mit ihrer Vorderseite abstützen, so dass eine kantengenaue Stapelung einer Anzahl von Produkten in der schachtförmigen Vertiefung 35 übereinander erfolgen kann. Je nach Produktformat, insbesondere Produkthöhe und Produktlänge, können in der schachtförmigen Vertiefung 35 hinter der Abschirmung 30 zwei, drei oder vier Lagen von Produkten übereinandergestapelt werden. Es besteht jedoch auch die Möglichkeit, die zu verarbeitenden Produkte, die in zwei, drei oder vier Lagen gestapelt werden können, auch im Einzeldurchlass durch die beiden in der Ausführungsvariante gemäß der Figuren 1 und 2 dargestellten zwei Stränge 66, 68 aufweisenden Fördereinrichtung 10 zu verarbeiten.

In Förderrichtung 12 gesehen, befindet sich hinter der schachtartigen Vertiefung 35 eine weitere, fünfte Fördereinrichtung 48.

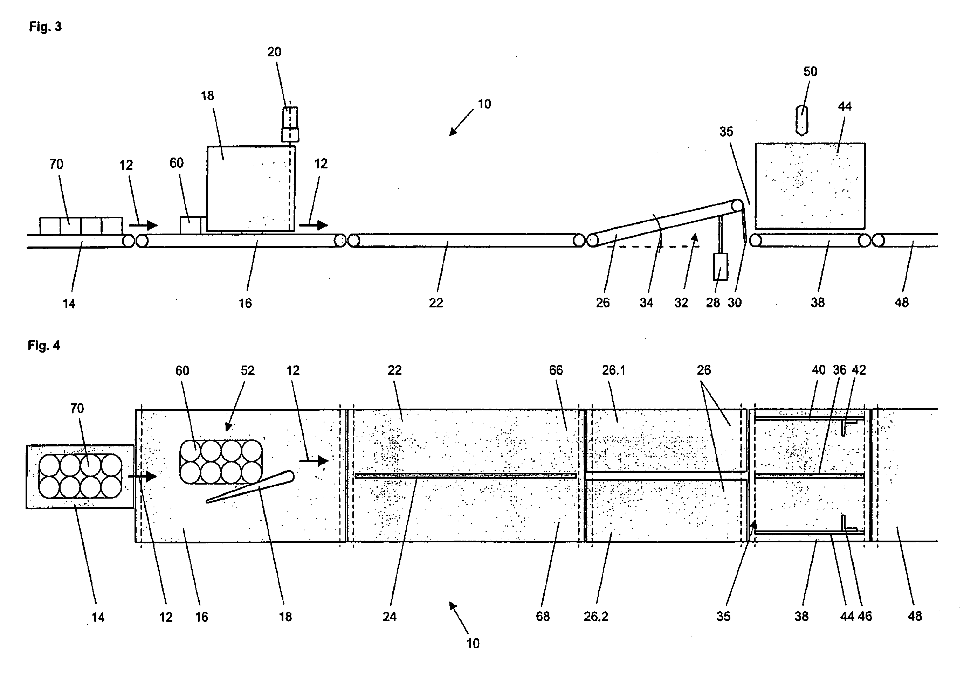

In den nachfolgenden Figuren 3 bis 26 werden jeweils Fördersequenzen von Produkten beschrieben. Die Produkte werden der erfindungsgemäß vorgeschlagenen Stapelvorrichtung 10 in einem kontinuierlichen Strom zugeführt und an einer Weiche zuvor in Zweier-, Dreier- oder Vierergruppen vereinzelt. Bei den Produkten handelt es sich um Hygieneartikel oder um Küchenrollen, um Papiertaschentücher, um WC-Papier oder dergleichen, die sich durch ein geringes Gewicht, jedoch ein relativ großes Volumen charakterisieren lassen.

Anhand der Figuren 3 bis 26 wird die Bearbeitung einzelner Produkte, die in einer schachtartigen Vertiefung aufeinandergestapelt werden und aus dieser wieder in Förderrichtung 12 hinausgefördert werden, nachfolgend eingehender beschrieben. Die Komponenten der erfindungsgemäß vorgeschlagenen Stapelvorrichtung 10 gemäß der Seitenansicht in Figur 1 und der Draufsicht in Figur 2 ändern sich nicht, so dass auf die Wiederholung von deren Funktion und deren Ausbildung in Zusammenhang mit der Figurenbeschreibung der Figuren 3 bis 26 verzichtet wird.

Der Darstellung gemäß Figur 3 ist zu entnehmen, dass das in Figur 2 über die erste Fördereinrichtung 14 herangeförderte erste Produkt 60 durch die Weiche 18, die sich in der ersten Weichenposition 52 befindet, in Förderrichtung 12 in Richtung des ersten Stranges 66 gefördert wird. Wie bereits im Zusammenhang mit den Figuren 1 und 2 erwähnt, ist die Weiche 18 zwischen der ersten Weichenposition 52 und der Weichenposition 54 durch den Stellantrieb 20, bei dem es sich um einen Elektroantrieb oder einen Pneumatikantrieb handeln kann, bewegbar. Den Darstellungen der Figuren 3 und 4 ist entnehmbar, dass auf das erste Produkt 60, welches sich auf der zweiten Fördereinrichtung 16 befindet, unmittelbar das zweite Produkt 70 folgt, welches durch die erste Fördereinrichtung 14 in Förderrichtung 12 auf die zweite Fördereinrichtung 16 gefördert wird und aufgrund der in der ersten Weichenposition 52 befindlichen Weiche 18 in den ersten Strang 66 gefördert wird. Wie aus der Darstellung gemäß Figur 3 hervorgeht, verbleibt die geteilt ausgebildete Rampe 26 in der angestellten Position 32, so dass sich - begrenzt durch die sich in senkrechte Richtung erstreckende Abschirmung 30 und die verfahrbaren Schieber 40, 44 mit dazwischen aufgenommener stationärer Führung 36 - die schachtförmige Vertiefung 35 ergibt.

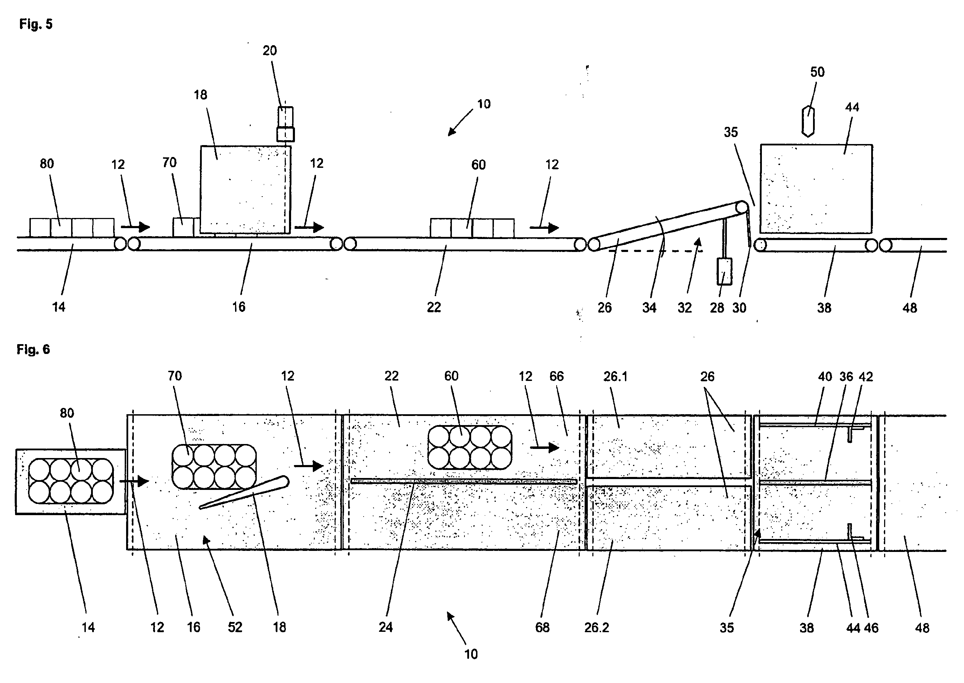

Die Figuren 5 und 6 zeigen, dass auf das erste Produkt 60, welches in Förderrichtung 12 auf die dritte Fördereinrichtung 22 gefördert wird, und auf das zweite Produkt 70, welches gerade die Weiche 18 passiert, ein drittes Produkt 80 gefördert wird. Die Weiche 18 befindet sich nach wie vor in der ersten Weichenposition 52. Sämtliche Produkte 60, 70, 80 werden durch die Fördereinrichtungen 14, 16, 22 in Förderrichtung 12 bewegt. Wie aus der Draufsicht gemäß Figur 6 entnehmbar, bildet sich demnach im ersten Strang 66 der erfindungsgemäß vorgeschlagenen Stapelvorrichtung 10 eine Dreierformation aus den Produkten 60, 70 und 80.

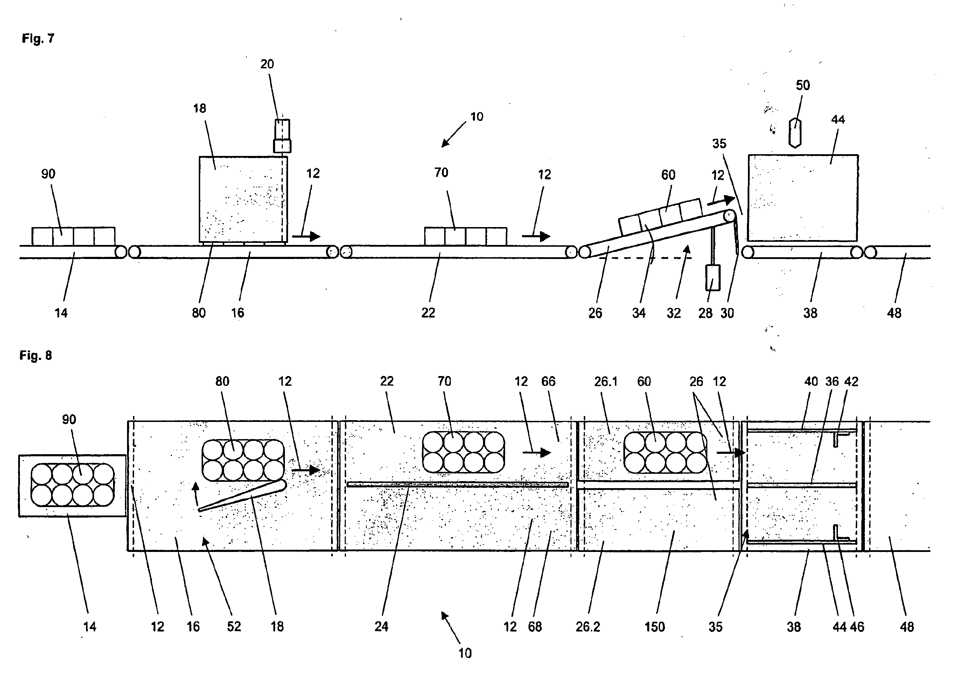

Den Darstellungen gemäß der Figuren 7 und 8 ist zu entnehmen, dass unmittelbar hinter dem dritten Produkt 80, welches gerade die Weiche 18 passiert, ein viertes Produkt 90 auf dem ersten Gurtförderer 14 angekommen ist. Das erste Produkt 60 hat die in der angestellten Position 32 befindliche geteilt ausgebildete Rampe 26 passiert und befindet sich unmittelbar vor dem Eintritt in die schachtartige Vertiefung 35, deren Tiefe durch den Anstellwinkel 34 der geteilt ausgebildeten Rampe 26 gebildet wird. Aus der Darstellung gemäß Figur 8 geht hervor, dass die beiden in horizontale Richtung bewegbaren Schieber 40, 44 in ihren angestellten Positionen befindlich sind.

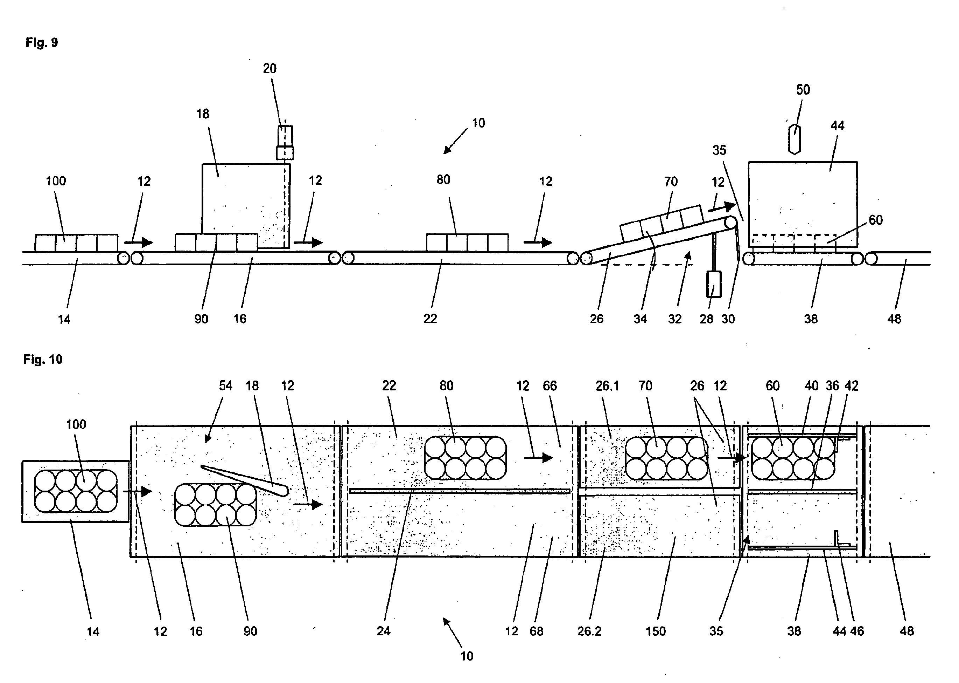

Aus den Figuren 9 und 10 geht hervor, dass das erste Produkt 60 in die schachtartige Vertiefung 35 gefallen ist und mit seiner Vorderseite am ersten Anschlagwinkel 42 an der Innenseite des ersten Schiebers 40 anliegt. Das erste Produkt 60 bildet demnach, wie aus der Seitenansicht gemäß Figur 9 hervorgeht, die erste Lage einer Stapelformation, die innerhalb der schachtartigen Vertiefung 35 hinter der geteilt ausgebildeten Rampe im ersten Strang 66 bzw. im diesem zugeordneten Abschnitt des durch die stationäre Führung 36 geteilten Bereichs der schachtförmigen Vertiefung 35 aufgebaut wird. Aus Figur 10 geht hervor, dass die Weiche 18 von ihrer ersten Weichenposition 52 in eine zweite Weichenposition 54 umgeschaltet ist.

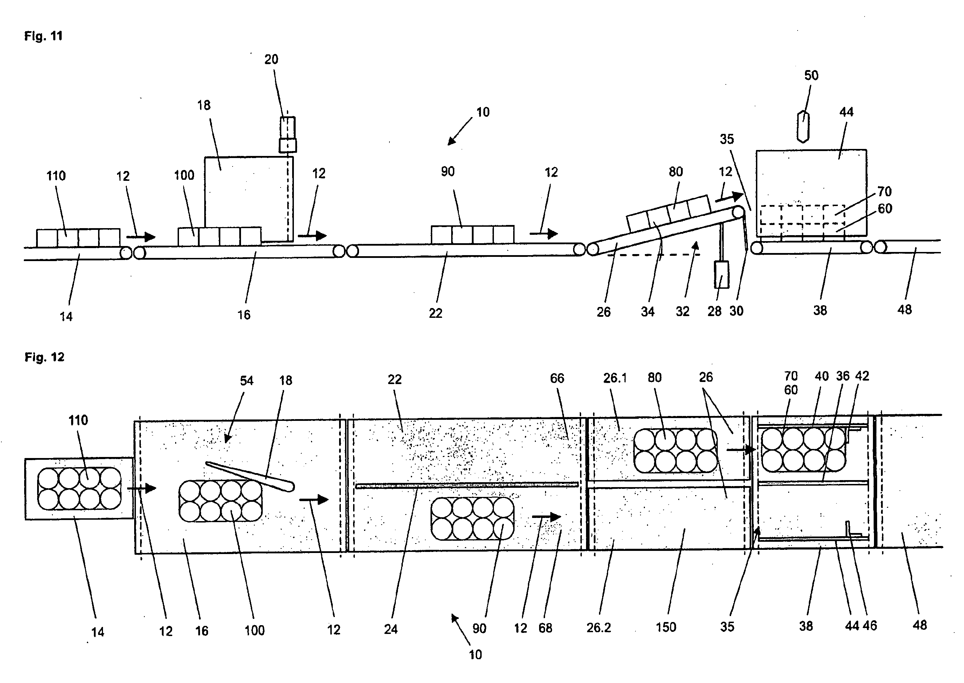

Den Figuren 9 und 10 lässt sich entnehmen, dass die über den Stellantrieb 20 betätigbare Weiche 18 ihre zweite Weichenposition 54 angenommen hat. Das von der ersten Fördereinrichtung 14 auf die zweite Fördereinrichtung 16 überführte vierte Produkt 90 wird demnach in den zweiten Strang 68 eingeschleust, der auf der verbliebenen Hälfte jenseits der Trennwand 24 verläuft. Gemäß der Darstellung in den Figuren 11 und 12 befindet sich mittlerweile ein fünftes Produkt 100 auf der ersten Fördereinrichtung 14. Dieses wird in Förderrichtung 12 auf die zweite Fördereinrichtung 16 überführt.

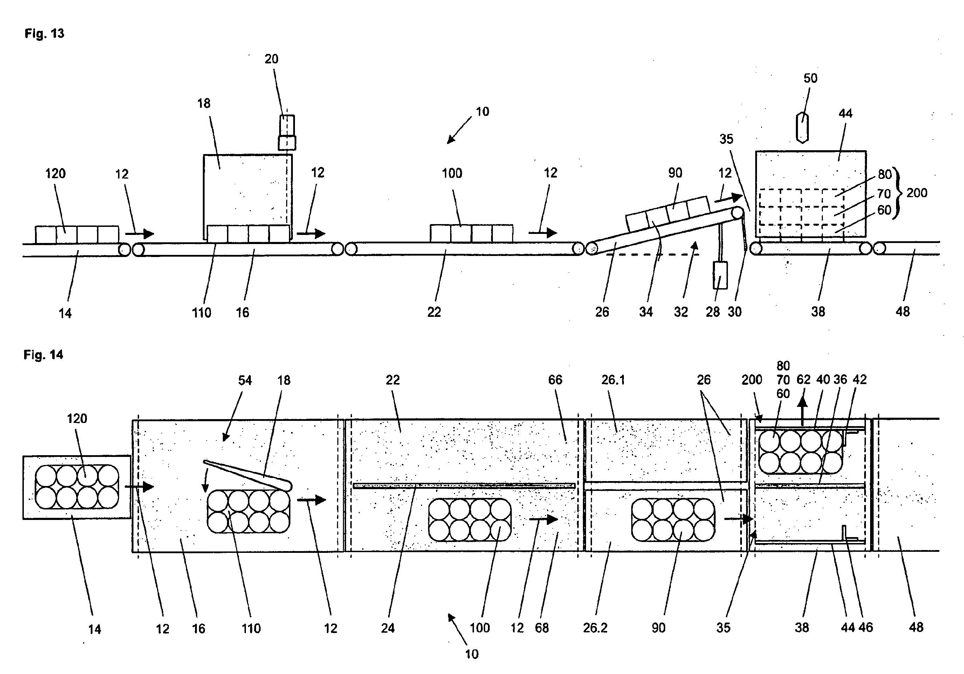

Den Figuren 11 und 12 ist zu entnehmen, dass gemäß dieser Momentaufnahme das fünfte Produkt 100 gerade die Weiche 18 passiert und in Förderrichtung 12, auf das vierte Produkt folgend in den zweiten Strang 68 auf die zweite Fördereinrichtung 16 aufläuft. Aus Figur 14 geht hervor, dass ein sechstes Produkt 110 die erste Fördereinrichtung 14 erreicht hat und ebenfalls durch die in der zweiten Weichenposition 54 befindliche Weiche 18 in den zweiten Strang 68 auf die dritte Fördereinrichtung 22 überführt wird. Inzwischen ist gemäß der Darstellung in Figur 11 das zweite Produkt 70 auf das erste Produkt 60 in der schachtartigen Vertiefung 35 gefördert. Das dieser Stapelformation zuzurechnende dritte Produkt 80 befindet sich in der Darstellung gemäß den Figuren 11 und 12 noch auf der geteilt ausgebildeten Rampe 26, und zwar auf dem Abschnitt, welcher dem ersten Strang 66 zugeordnet ist.

Aus der Darstellung gemäß Figur 11 geht hervor, dass die Oberseite des zweiten Produktes 70 mit der Ausgangsseite der in der angestellten Position 32 befindlichen geteilt ausgebildeten Rampe 26 fluchtet.

Auch das zweite Produkt 70 wird am ersten Anschlagwinkel 42, welcher sich an der Innenseite des ersten Schiebers 40 befindet, ausgerichtet.

Den Figuren 13 und 14 ist entnehmbar, dass nunmehr das dritte Produkt 80 durch die Fördereinrichtung, die durch die geteilt ausgebildete Rampe 26 gebildet ist und die dem ersten Strang 66 zugeordnet ist, auf die Oberseite des zweiten Produktes 70 gefördert ist, so dass sich ein erster Stapel 200 zwischen dem ersten Schieber 40 und der stationären Führung 36 und der schachtförmigen Vertiefung 35 gebildet hat. Parallel zu dem Stapelvorgang, der im ersten Strang 66 in der schachtförmigen Vertiefung 35 auf Seiten des ersten Stranges 66 erfolgt, werden im zweiten Strang 68 das vierte Produkt 90, das fünfte Produkt 100 sowie das sechste Produkt 110 über die Fördereinrichtungen 16, 22 sowie die geteilt ausgebildete Rampe 26 bzw. den zweiten Strang 68 an die schachtförmige Vertiefung 35 herangefördert. Wie aus der Darstellung gemäß Figur 14 hervorgeht, befindet sich die Weiche 18 noch in ihrer zweiten Weichenposition 54. Gemäß den Darstellungen in den Figuren 13 und 14 befindet sich auf der ersten Fördereinrichtung 14 bereits ein siebtes Produkt 120.

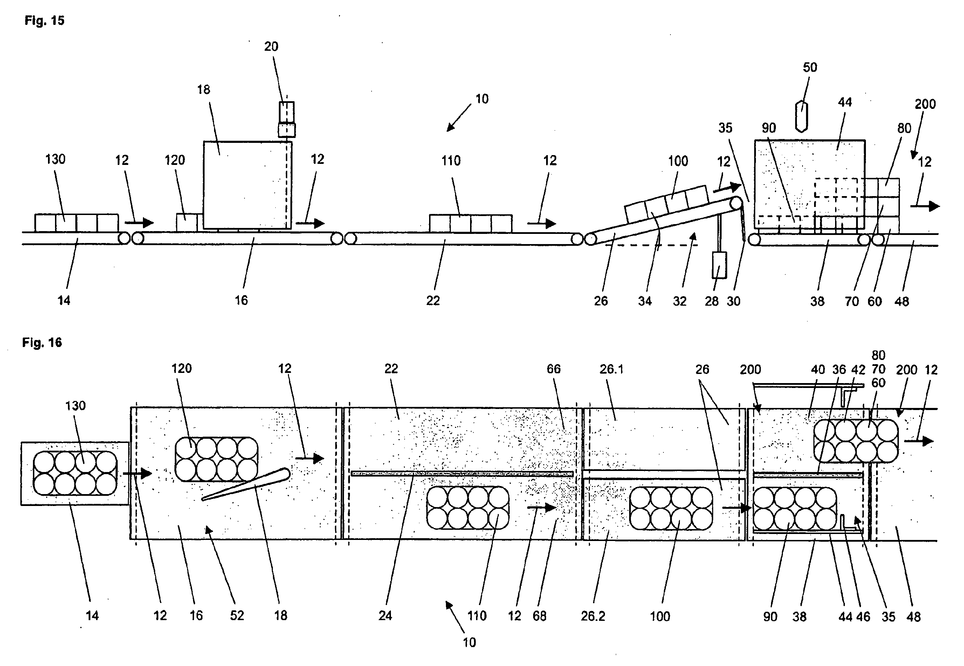

Aus den Darstellungen gemäß der Figuren 15 und 16 geht hervor, dass der erste Stapel 200 nach wie vor sich innerhalb der schachtförmigen Vertiefung 35 befindet. Gemäß der Darstellung in Figur 16 wird vor Weiterförderung des siebten Produktes 120 in Förderrichtung 12 die Weiche 18 aus ihrer dargestellten zweiten Weichenposition 54 wieder in die erste Weichenposition 52 überführt. Dies erfolgt durch Betätigung des Stellantriebs 20, bei dem es sich entweder um einen Elektroantrieb oder auch um einen Pneumatikzylinder oder dergleichen handeln kann. Der Darstellung gemäß Figur 16 ist zu entnehmen, dass das vierte Produkt 90 in die schachtförmige Vertiefung 35 hineingefallen ist und dass in der Zwischenzeit das fünfte Produkt 100 die geteilt ausgebildete Rampe 26 erreicht hat, während sich das sechste Produkt 110 im zweiten Strang 68 in der Förderebene der dritten Fördereinrichtung 22 befindet.

Figur 16 ist des Weiteren zu entnehmen, dass der erste Schieber 40 eine in horizontale Richtung in der Zeichenebene verlaufende erste Freigabebewegung 62 nach außen vollführt, demnach die Vorderkante des ersten Stapels 200 freigibt.

In den Figuren 15 und 16 ist zu erkennen, dass bei in eine Freigabeposition bewegtem ersten Schieber 40 der erste Anschlagwinkel 42 den Förderpfad des ersten Stapels 200 freigibt und dieser in Förderrichtung 12 aus der schachtartigen Vertiefung 35 auf die fünfte Fördereinrichtung 48 gefördert wird. Gleichzeitig mit dem Herausfahren des ersten Stapels 200 aus der schachtartigen Vertiefung 35 hinter der geteilt ausgebildeten Rampe 26 erfolgt der Aufbau eines zweiten Stapels aus dem vierten Produkt 90, dem fünften Produkt 100 und dem sechsten Produkt 110, welches sich gemäß den Darstellungen in den Figuren 15 und 16 noch im zweiten Strang 68 auf die dritte Fördereinrichtung 22 befindet. Die Weiche 18 nimmt wieder ihre erste Weichenposition 52 an, d.h. ein weiteres, siebtes Produkt 120 sowie das diesem nachfolgende achte Produkt 130 werden von der ersten Fördereinrichtung 14 bzw. der zweiten Fördereinrichtung 16 in den ersten Strang 66 in Förderrichtung 12 eingeschleust. In der Darstellung gemäß Figur 15 ist das vierte Produkt 90 zu erkennen, welches in die schachtartige Vertiefung 35 hineingefallen ist und eine erste Stapellage eines noch aufzubauenden zweiten Stapels innerhalb der schachtförmigen Vertiefung 35 darstellt. Das in der Momentaufnahme gemäß den Figuren 15 und 16 auf der geteilt ausgebildeten Rampe 26 geförderte fünfte Produkt 100 bildet eine weitere Lage des in der schachtförmigen Vertiefung 35 aufzubauenden weiteren Stapels.

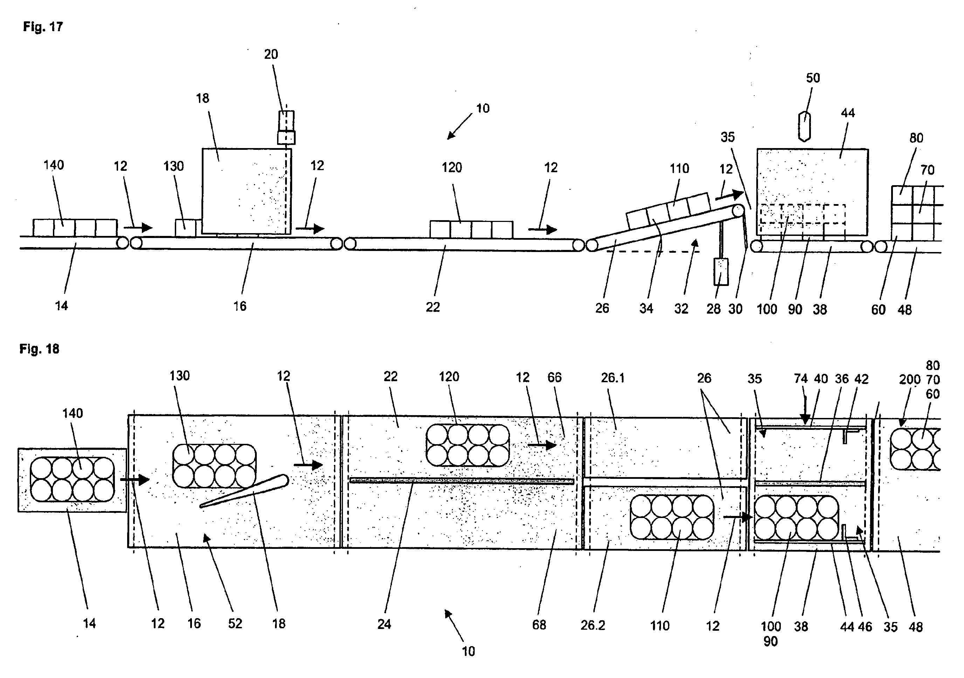

Den Figuren 17 und 18 ist zu entnehmen, dass in der Stapeleinrichtung 10 gemäß der vorliegenden Erfindung der erste Stapel 200, gebildet aus dem ersten Produkt 60, dem zweiten Produkt 70 und dem dritten Produkt 80, die schachtförmige Vertiefung vollständig verlassen hat und sich nunmehr auf der fünften Fördereinrichtung 48 befindet. Parallel dazu ist in der Zwischenzeit das fünfte Produkt 100 auf das vierte Produkt 90 aufgestapelt. In der Darstellung gemäß den Figuren 17 und 18 bildet das fünfte Produkt 100 die zweite Stapellage eines noch aufzubauenden Stapels. Die noch fehlende dritte Stapelschicht innerhalb des noch aufzubauenden Stapels wird durch das sechste Produkt 110 gebildet, welches sich in der Momentaufnahme gemäß den Figuren 17 und 18 auf der Oberseite der geteilt ausgebildeten Rampe 26 befindet. Den Darstellungen gemäß den Figuren 17 und 18 ist darüber hinaus zu entnehmen, dass aufgrund der in die erste Weichenposition 52 gestellten Weiche 18 das siebte Produkt 120, ein achtes Produkt 130 und ein neuntes Produkt 140 im Begriff sind, über die erste Fördereinrichtung 14, die zweite Fördereinrichtung 16 und die dritte Fördereinrichtung 22 in den ersten Strang 66 der Förderebene einzulaufen. Das sich an den ersten Strang 66 anschließende Abteil innerhalb der schachtförmigen Vertiefung 35 hat der erste Stapel 200 verlassen, der sich gemäß den Darstellungen in den Figuren 17 und 18 bereits auf der fünften Fördereinrichtung 48 befindet. Der Aufbau eines weiteren Stapels, das vierte Produkt 90, das fünfte Produkt 100 und das sechste Produkt 110 umfassend, steht in der Momentaufnahme gemäß den Figuren 17 und 18 kurz vor dem Abschluss. Bezugszeichen 74 bezeichnet die Rückstellbewegung des ersten Schiebers 40.

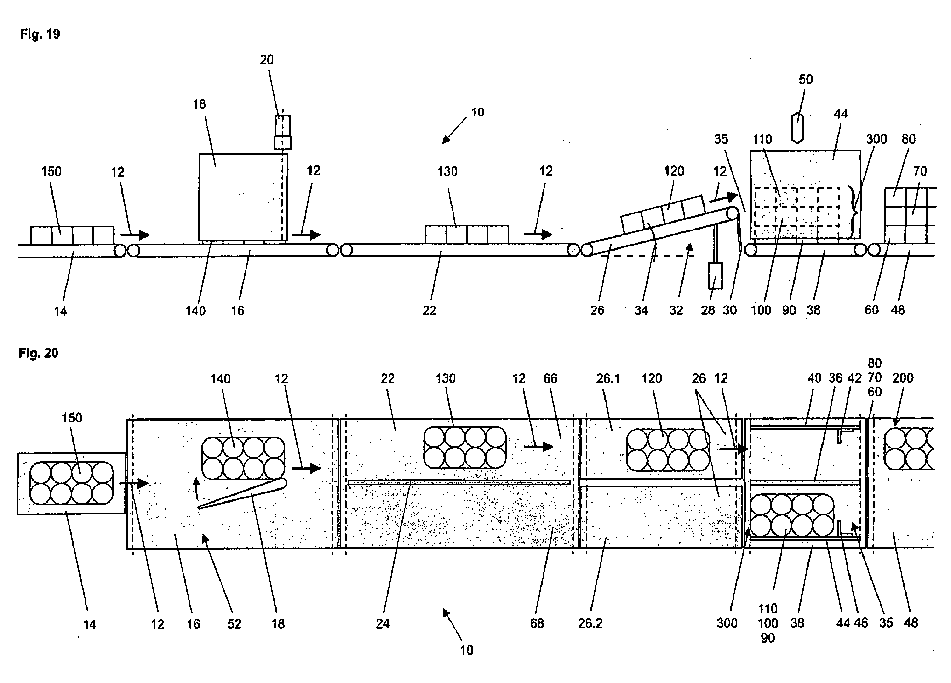

Den Figuren 19 und 20 ist zu entnehmen, dass sich der erste Stapel 200, gebildet aus dem ersten Produkt 60, dem zweiten Produkt 70 und dem dritten Produkt 80, nach wie vor auf der fünften Fördereinrichtung 48 befindet. Der Aufbau eines weiteren, d.h. des zweiten Stapels 300 hinter dem zweiten Strang 68 ist vollendet. Aus der Darstellung gemäß Figur 19 geht hervor, dass der zweite Stapel 300, der nunmehr fertig konfektioniert ist, sich noch innerhalb der schachtförmigen Vertiefung 35 befindet. Der zweite Stapel 300 umfasst das vierte Produkt 90, das fünfte Produkt 100 sowie das sechste Produkt 110.

Figur 19 und Figur 20 zeigen darüber hinaus, dass sich aufgrund der in der ersten Weichenposition 52 befindlichen Weiche 18 das siebte Produkt 120 auf der geteilt ausgebildeten Rampe 26 befindet, das achte Produkt 130 in den ersten Strang 66 auf eine Teilfläche der dritten Fördereinrichtung 22 aufgelaufen ist und das neunte Produkt 140 im Begriff ist, die sich in der ersten Weichenposition 52 befindliche Weiche 18 zu passieren.

Die Produkte 90, 100, 120, 130, 140 bewegen sich alle in Förderrichtung 12. Vor der zweiten Fördereinrichtung 16 befindet sich auf der ersten Fördereinrichtung 14 das zehnte Produkt 150.

Den Darstellungen gemäß der Figuren 19 und 20 ist zu entnehmen, dass der zweite Stapel 300 komplett aufgebaut ist, und die drei Produkte, d.h. das siebte Produkt 120, das achte Produkt 130 und das vierte Produkt 190, bereits in den ersten Strang 66 eingeschleust sind und innerhalb der schachtförmigen Vertiefung 35 nun aufeinandergestapelt werden. Im Zusammenhang mit der schachtförmigen Vertiefung 35 ist zu erwähnen, dass die sich im Wesentlichen in vertikale Richtung erstreckende Abschirmung 30 einen Schutz gegen Herausrutschen der zuerst aufgestapelten Lagen von Produkten bildet, die auf der vierten Fördereinrichtung 38 auftreffen, , so dass die Stapelbildung einerseits durch die sich in senkrechte Richtung erstreckenden Abschirmungen 30, die beiden Schieber 40 sowie die Anschlagwinkel 42 und 46 sichergestellt ist.

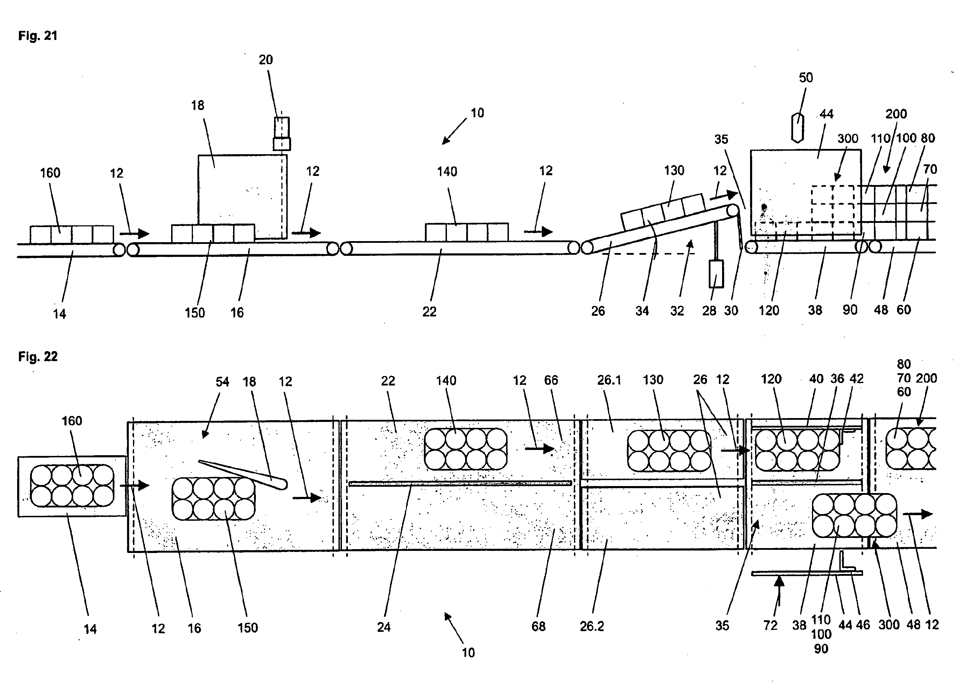

Die Figuren 21 und 22 zeigen, dass der gemäß der Figuren 19 und 20 fertigkonfektionierte zweite Stapel 300 aus dem Bereich der schachtförmigen Vertiefung 35 ausgeschleust wird, der sich an den zweiten Strang 68 anschließt. Dazu fährt der zweite Schieber 44 in eine Freigabeposition 72 aus, durch die der zweite Anschlagwinkel 46 von der Vorderkante des zweiten Stapels 300 entfernt wird, so dass der Vorschub des zweiten Stapels 300 in Förderrichtung 12 in Richtung auf die fünfte Fördereinrichtung 48 gewährleistet ist. Parallel zur Freigabe 64 wird im ersten Strang 66 bzw. in dem sich an diesen anschließenden Abschnitt der schachtförmigen Vertiefung 35 ein weiterer Stapel, das siebte Produkt 120, das achte Produkt 130 sowie das neunte Produkt 140 umfassend, aufgestapelt. Aus der Darstellung gemäß Figur 22 geht zudem hervor, dass gemäß dieser Momentaufnahme die Weiche 18 wieder in die zweite Weichenposition 54 überführt wird, so dass das sich gemäß der Figuren 21 und 22 bereits auf der zweiten Fördereinrichtung 16 befindliche zehnte Produkt 150 in den zweiten Strang 68 der Stapelvorrichtung 10 eingeschleust werden kann.

Den Figuren 21 und 22 ist zu entnehmen, dass nach der Freigabe des zweiten Schiebers 44 der Förderpfad in Förderrichtung 12 für den zweiten Stapel 300 freigegeben ist und dieser aus dem sich an den zweiten Strang 68 anschließenden Abschnitt der schachtförmigen Vertiefung 35 herausgefördert ist. Der erste Stapel 200 befindet sich nach wie vor auf der fünften Fördereinrichtung 48. Parallel zum Ausfahren des zweiten Stapels 300 aus der schachtförmigen Vertiefung 35 wird im sich an den ersten Strang 66 anschließenden Abschnitt der schachtförmigen Vertiefung 35 ein weiterer Stapel aufgebaut. Dieser umfasst das siebte Produkt 120, das achte Produkt 130, welches sich noch auf der geteilt ausgebildeten Rampe 26 befindet, sowie das neunte Produkt 140, welches sich in der Förderebene der dritten Fördereinrichtung 22 befindet. Aus Figur 22 lässt sich entnehmen, dass sich die Weiche 18 in ihrer zweiten Weichenposition 54 befindet.

Dadurch läuft das zehnte Produkt 150 und ein sich in der Momentaufnahme gemäß der Figuren 21 und 22 auf dem ersten Gurtförderer 14 befindliches elftes Produkt 160 in den zweiten Strang 68 der Stapelvorrichtung 10 ein. Der Seitenansicht gemäß Figur 21 ist zu entnehmen, dass sich der erste Stapel 200 auf der fünften Fördereinrichtung 48 befindet und der dritte Stapel 300 aus der schachtförmigen Vertiefung 35 ausfährt. In Bezug auf einen weiteren, durch das siebte Produkt 120, das achte Produkt 130 und das neunte Produkt 140 zu bildenden Stapel befindet sich von diesem erst das siebte Produkt 120 in der schachtförmigen Vertiefung. Das achte Produkt 130 wird durch die geteilt ausgebildete Rampe 26 in Förderrichtung 12 auf die Oberseite des siebten Produktes 120 gefördert.

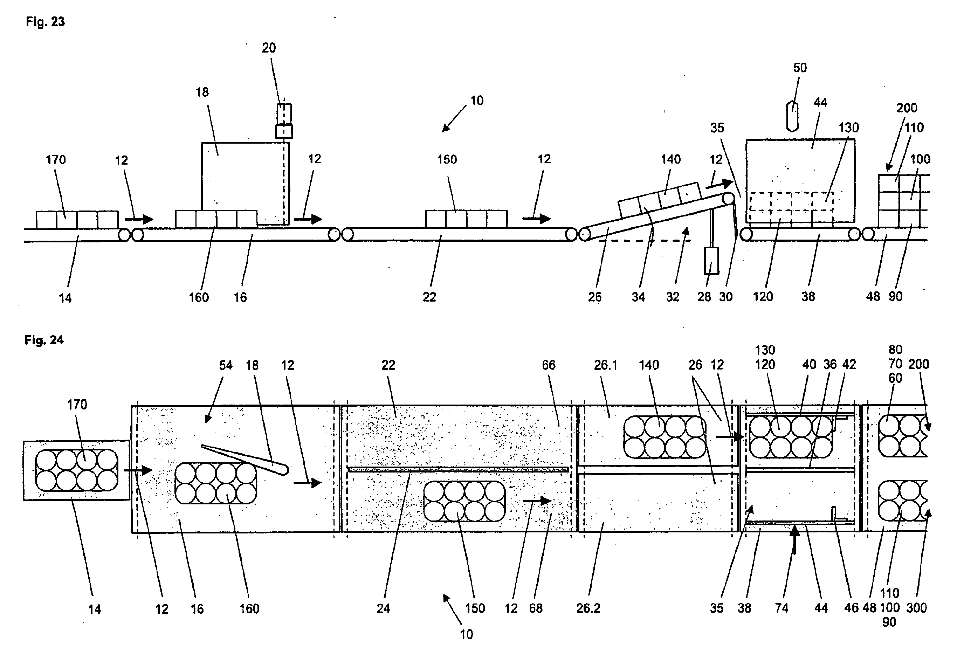

Den Figuren 23 und 24 ist zu entnehmen, dass sich auf der fünften Fördereinrichtung 48 der erste Stapel 200 sowie der zweite Stapel 300 nebeneinander befinden. Der Aufbau eines dritten Stapels in dem Abschnitt der schachtförmigen Vertiefung 35, die dem ersten Strang 66 nachgeschaltet ist, ist fast abgeschlossen. Aus der Seitenansicht gemäß Figur 23 geht hervor, dass das achte Produkt 130 bereits auf das siebte Produkt 120 aufgestapelt ist und das neunte Produkt 140 im Begriff ist, in Förderrichtung 12 auf die Oberseite des achten Produktes 130 gefördert zu werden. Aufgrund der sich in der zweiten Weichenposition 54 befindenden Weiche 18 laufen das zehnte Produkt 150, das elfte Produkt 160 sowie das sich noch auf dem ersten Gurtförderer 14 befindliche zwölfte Produkt 170 in den zweiten Strang 68 der Stapelvorrichtung 10 ein.

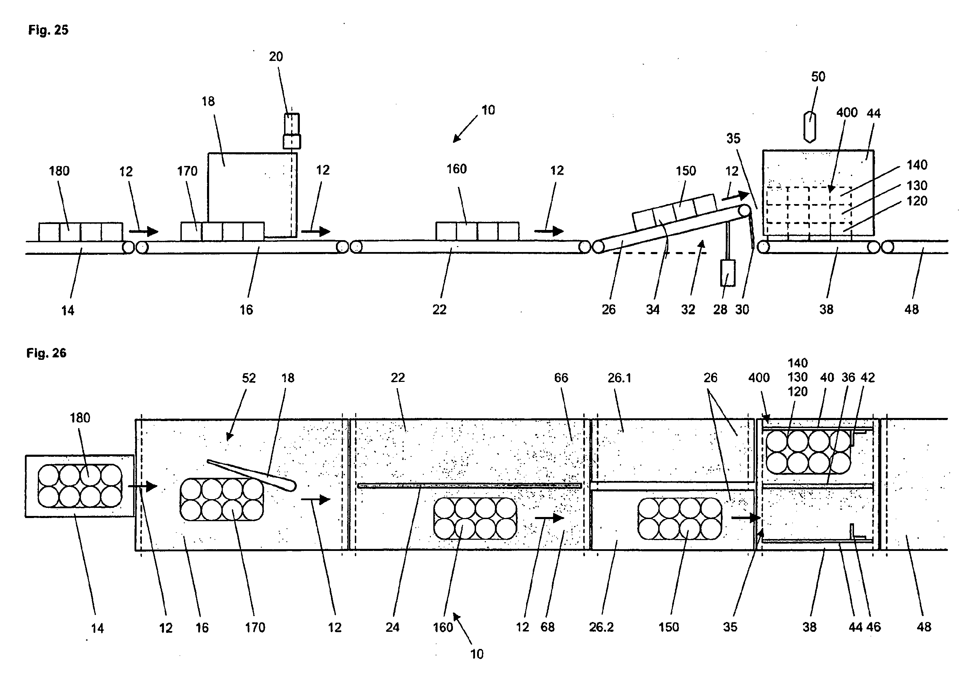

Den Figuren 25 und 26 ist zu entnehmen, dass ein dritter Stapel 400 aus dem siebten Produkt 120, dem achten Produkt 130 und dem neunten Produkt 140 aufgebaut ist. Aus dem zehnten Produkt 150, welches bereits in die schachtförmige Vertiefung 35 aufgrund der Wirkung der Schwerkraft hineingefallen ist, und dem sich derzeit innerhalb des zweiten Stranges 68 auf der geteilt ausgebildeten Rampe 26 befindlichen elften Produkt 160 und dem zwölften Produkt 170 wird ein weiterer Stapel gebildet, dessen Aufbau jedoch gemäß der Figurensequenz der Figuren 25 und 26 noch nicht abgeschlossen ist.

Wenngleich im Rahmen der vorstehenden Figuren 1 bis 26 ein Aufbau von Stapeln 100, 200, 300 und 400 aus lediglich drei Produktlagen dargestellt ist, lässt sich abhängig vom Anstellwinkel 34 der geteilt ausgebildeten Rampe 26 noch eine mehr als drei Lagen umfassende Stapelbildung realisieren. Dies hängt einerseits vom Anstellwinkel 34 der hier zum Beispiel geteilt ausgebildeten Rampe 26, mit einem ersten Rampenteil 26.1 und einem zweiten Rampenteil 26.2 ab und andererseits von der Falltiefe der Produkte in die schachtförmige Vertiefung 35. Je nach Elastizität, Volumen und Gewicht können auch mehr als drei Lagen kantengenau in der schachtförmigen Vertiefung 35 beidseits der stationären Führung 36 aufgestapelt werden; ebenso gut besteht die Möglichkeit eines Einzeldurchlasses der Produkte 60 bis 180 sowohl in beiden Strängen 66, 68 ohne Weiche 18 als auch lediglich in einem der Stränge 66 oder 68, für den Fall, dass die erfindungsgemäß vorgeschlagene Fördereinrichtung 10 einsträngig aufgebaut ist.

Der Vorteil der obenstehend anhand der Figuren 1 bis 26 beschriebenen Fördereinrichtung liegt darin, dass der entscheidende Produktivitätsgewinn darin liegt, dass nach der Aufstapelung von Produkten in Stapel 200, 300 bzw. 400 durch eine anschließende Handhabungseinrichtung drei Produkte auf einmal gehandhabt werden, was zum Beispiel in einem Zeitraum von allen 1,5 Sekunden erfolgt, während bei einem Einzeldurchlass von Produkten 60 bis 180 alle zum Beispiel 1,5 Sekunden lediglich eine Lage handhabbar ist. Je mehr Produktlagen innerhalb der einzelnen Stapel 200, 300 bzw. 400 gebildet werden, desto größer ist der Produktivitätsgewinn hinsichtlich einer Handhabung in einem nachgeschalteten Modul, mit welchem zum Beispiel die einzelnen Lagen auf Industriepaletten oder Europaletten gehandhabt werden.

## Patentansprüche

1. Vorrichtung zum Stapeln von Produkten (60-180) mit hoher Geschwindigkeit, bei der ein kontinuierlicher Strom von Produkten (60-180) an einer Weiche (18) in einen ersten Strang (66) und einen zweiten Strang (68) aufgeteilt wird, oder in einem Strang gefördert wird, **dadurch gekennzeichnet, dass** die Produkte (60-180) in einer in Förderrichtung (12) vorgesehenen schachtförmigen Vertiefung (35) stapelbar sind, die durch eine Abschirmung (30) und Schieber (40, 44) seitlich begrenzt ist, und dass die Schieber (40, 44) verstellbare Anschläge (42, 46) oder verschwenkbare Klappen zur Ausrichtung der Vorderkanten der Produkte (60-180) aufweisen, wobei die Schieber (40, 44) durch einen Linearantrieb (50) in horizontale Richtung (62, 64; 74) bewegbar sind, und die Abschirmung (30) sich in etwa senkrecht vor der schachtförmigen Vertiefung (35) erstreckt

2. Vorrichtung gemäß Anspruch 1, **dadurch gekennzeichnet, dass** ein erster Strang und ein zweiter Strang (68) durch Fördereinrichtungen (16, 22, 26, 38, 48), die als Gurtförderer, Rollenbahnen oder Gliederförderer ausgebildet sind, gebildet sind, die entweder eine gesamte oder eine halbe Breite eines Förderpfades für die Produkte (60-180) abdecken.

3. Vorrichtung gemäß Anspruch 1, **dadurch gekennzeichnet, dass** die Aufteilung des Stroms von Produkten (60-180) an einer Weiche (18) erfolgt, die mittels eines Stellantriebes (20) betätigbar ist.

4. Vorrichtung gemäß Anspruch 3, **dadurch gekennzeichnet, dass** der Stellantrieb (20) ein Elektroantrieb oder ein Magnet oder eine Hydraulik- oder eine Pneumatikeinrichtung ist.

5. Vorrichtung gemäß Anspruch 3, **dadurch gekennzeichnet, dass** in einer ersten Weichenposition (52) der Weiche (18) Produkte (60-180) in den ersten Strang (66) und in einer zweiten Weichenposition (54) der Weiche (18) die Produkte (60-180) in den zweiten Strang (68) eingeschleust werden.

6. Vorrichtung gemäß Anspruch 1, **dadurch gekennzeichnet, dass** in einer angestellten Position (32) einer Rampe (26) im Förderpfad der Produkte (60-170), diese abhängig von einem Anstellwinkel (34) in die schachtförmige Vertiefung (35) fallen.

7. Vorrichtung gemäß Anspruch 1, **dadurch gekennzeichnet, dass** die schachtförmige Vertiefung (35) in Stufenform im Förderpfad der Fördereinrichtungen (16, 22, 26, 38, 48) gebildet ist.

8. Vorrichtung gemäß Anspruch 6, **dadurch gekennzeichnet, dass** die Rampe (26) geteilt ausgeführt ist und einen dem ersten Strang (66) zugeordneten Förderabschnitt (26.1) und einen dem zweiten Strang (68) zugeordneten Förderabschnitt (26.2) aufweist.

9. Vorrichtung gemäß Anspruch 1, **dadurch gekennzeichnet, dass** die schachtförmige Vertiefung (35) durch eine stationäre Führung (36) unterteilt ist.

10. Vorrichtung gemäß Anspruch 1, **dadurch gekennzeichnet, dass** die Anschläge (42, 46) an den den Produkten (60-180) zuweisenden Innenseiten der Schieber (40, 44) entsprechend der Länge der Produkte (60-180) in Förderrichtung (12) verstellbar sind.

11. Vorrichtung gemäß Anspruch 1, **dadurch gekennzeichnet, dass** der Anstellwinkel (34) einer Rampe (26), die sich vor der schachtförmigen Vertiefung (35) erstreckt, mittels eines Aktors (28) verstellbar ist.

12. Vorrichtung gemäß Anspruch 1, **dadurch gekennzeichnet, dass** der Anstellwinkel (34) einer Rampe (26), die sich vor der schachtförmigen Vertiefung (35) erstreckt, manuell veränderbar ist.

13. Verfahren zur Bildung von Stapeln (200, 300, 400) von Produkten (60-180) in einer Vorrichtung gemäß einem oder mehrerer der vorhergehenden Ansprüche mit nachfolgenden Verfahrensschritten:
a) dem Aufteilen eines Stromes von Produkten (60-180) in einen ersten Strang (66) und einen zweiten Strang (68),
b) dem parallelen Fördern von Gruppen von Produkten (60, 70, 80 und 90, 100, 110) in Förderrichtung (12) zu einer Rampe (26) und
c) der parallelen Bildung von Stapeln (200, 300) aus den Gruppen von Produkten (60, 70, 80 und 90, 100, 110) in der schachtförmigen Vertiefung (35), die durch die Abschirmung (30) und Schieber (40, 44) seitlich begrenzt ist, und die Ausrichtung der Produkte (60-170) bei der Bildung von Stapeln (200, 300, 400) an den Anschlägen (42, 46) und den Schiebern (40, 44) erfolgt, wobei eine Förderung der Stapel (200, 300, 400) in Förderrichtung (12) aus der schachtförmigen Vertiefung (35) nach einer Freigabebewegung (62, 64) der beweglichen Schieber (40, 44) durch eine Fördereinrichtung (38) erfolgt.

14. Verfahren gemäß Anspruch 13, **dadurch gekennzeichnet, dass** die Bildung der Stapel (200, 300) aus einer Gruppe von mindestens zwei Produkten (60, 70, 80; 90, 100, 110; 120, 130, 140) erfolgt.

15. Verfahren gemäß Anspruch 13, **dadurch gekennzeichnet, dass** die Stapelbildung von Stapeln (200, 300, 400) durch Herabfallen der Produkte (60-170) auf eine Bodenfläche (38) der schachtförmigen Vertiefung (35) erfolgt.

## Claims

1. Apparatus for stacking products (60-180) at a high speed and in which a continuous stream of products (60-180) is divided up, at a diverter (18), into a first line (66) and a second line (68), or is conveyed in one line, **characterized in that** the products (60-180) can be stacked in a shaft-like recess (35) which is provided in the conveying direction (12) and is bounded laterally by a screen (30) and pushers (40, 44), and **in that** the pushers (40, 44) have adjustable stops (42, 46) or pivotable flaps for aligning the leading edges of the products (60-180), wherein the pushers (40, 44) can be moved in the horizontal direction (62, 64; 74) by a linear drive (50) and the screen (30) extends approximately vertically in front of the shaft-like recess (35).

2. Apparatus according to Claim 1, **characterized in that** a first line and a second line (68) are formed by conveying arrangements (16, 22, 26, 38, 48), which are designed as belt conveyors, roller conveyors or link conveyors, which cover either the entire width or half the width of a conveying path for the products (60-180).

3. Apparatus according to Claim 1, **characterized in that** the stream of products (60-180) is divided up at a diverter (18) which can be actuated by means of an actuating drive (20).

4. Apparatus according to Claim 3, **characterized in that** the actuating drive (20) is an electric drive or a magnet or a hydraulic or pneumatic arrangement.

5. Apparatus according to Claim 3, **characterized in that**, in a first position (52) of the diverter (18), products (60-180) are introduced into the first line (66) and, in a second position (54) of the diverter (18), the products (60-180) are introduced into the second line (68).

6. Apparatus according to Claim 1, **characterized in that**, in a set position (32) of a ramp (26) in the conveying path of the products (60-170), these products drop into the shaft-like recess (35) in dependence on a setting angle (34).

7. Apparatus according to Claim 1, **characterized in that** the shaft-like recess (35) is in step form in the conveying path of the conveying arrangements (16, 22, 26, 38, 48).

8. Apparatus according to Claim 6, **characterized in that** the ramp (26) is of divided configuration and has a conveying portion (26.1) assigned to the first line (66) and a conveying portion (26.2) assigned to the second line (68).

9. Apparatus according to Claim 1, **characterized in that** the shaft-like recess (35) is subdivided by a stationary guide (36).

10. Apparatus according to Claim 1, **characterized in that** the stops (42, 46) on the inner sides of the pushers (40, 44), oriented towards the products (60-180), can be adjusted in the conveying direction (12) in accordance with the lengths of the products (60-180).

11. Apparatus according to Claim 1, **characterized in that** the setting angle (34) of a ramp (26), which extends in front of the shaft-like recess (35), can be adjusted by means of an actuator (28).

12. Apparatus according to Claim 1, **characterized in that** the setting angle (34) of a ramp (26), which extends in front of the shaft-like recess (35), can be altered manually.

13. Method for forming stacks (200, 300, 400) of products (60-180) in an apparatus according to one or more of the preceding claims, having the following method steps:
a) dividing up a stream of products (60-180) into a first line (66) and a second line (68),
b) conveying groups of products (60, 70, 80 and 90, 100, 110) in a parallel state in the conveying direction (12) to a ramp (26), and
c) forming stacks (200, 300), in a parallel state, from the groups of products (60, 70, 80 and 90, 100, 110) in the shaft-like recess (35), which is bounded laterally by the screen (30) and pushers (40, 44), the products (60-170) being aligned on the stops (42, 46) and the pushers (40, 44) as stacks (200, 300, 400) are being formed, wherein, following a release movement (62, 64) of the movable pushers (40, 44), the stacks (200, 300, 400) are conveyed in the conveying direction (12), out of the shaft-like recess (35), by a conveying arrangement (38).

14. Method according to Claim 13, **characterized in that** the stacks (200, 300) are formed from a group of at least two products (60, 70, 80, 90, 100, 110; 120, 130, 140).

15. Method according to Claim 13, **characterized in that** stacks (200, 300, 400) are formed by virtue of the products (60-170) dropping down onto a floor surface (38) of the shaft-like recess (35).

## Revendications

1. Dispositif pour empiler des objets (60-180) à grande vitesse, dans lequel un flux continu d'objets (60-180) est divisé à un aiguillage (18) en un premier courant (66) et un deuxième courant (68), ou est transporté en un courant, **caractérisé en ce que** les objets (60-180) peuvent être empilés dans un creux en forme de puits (35) prévu dans la direction de transport (12), qui est limité latéralement par un écran (30) et des coulisseaux (40, 44), et **en ce que** les coulisseaux (40, 44) présentent des butées réglables (42, 46) ou des clapets pivotants pour aligner les arêtes avant des objets (60-180), dans lequel les coulisseaux (40, 44) peuvent être déplacés en direction horizontale (62, 64; 74) au moyen d'un entraînement linéaire (50) et l'écran (30) s'étend à peu près verticalement devant le creux en forme de puits (35).

2. Dispositif selon la revendication 1, **caractérisé en ce qu'**un premier courant et un deuxième courant (68) sont formés par des dispositifs de transport (16, 22, 26, 38, 48), qui sont réalisés sous la forme de convoyeurs à courroie, de transporteur à rouleaux ou de convoyeurs à maillons, qui couvrent soit la totalité soit la moitié de la largeur d'un chemin de transport pour les objets (60-180).

3. Dispositif selon la revendication 1, **caractérisé en ce que** la division du flux d'objets (60-180) est effectuée à un aiguillage (18), qui peut être actionné au moyen d'un servomoteur (20).

4. Dispositif selon la revendication 3, **caractérisé en ce que** le servomoteur (20) est un entraînement électrique ou un aimant ou un dispositif hydraulique ou pneumatique.

5. Dispositif selon la revendication 3, **caractérisé en ce que**, dans une première position d'aiguille (52) de l'aiguillage (18), les objets (60-180) sont dirigés dans le premier courant (66) et, dans une deuxième position d'aiguille (54) de l'aiguillage (18), les objets (60-180) sont dirigés dans le deuxième courant (68).

6. Dispositif selon la revendication 1, **caractérisé en ce que**, dans une position inclinée (32) d'une rampe (26) dans le chemin de transport des objets (60-170), ceux-ci tombent dans le creux en forme de puits (35) en fonction d'un angle d'inclinaison (34).

7. Dispositif selon la revendication 1, **caractérisé en ce que** le creux en forme de puits (35) est formé sous forme étagée dans le chemin de transport des dispositifs de transport (16, 22, 26, 38, 48).

8. Dispositif selon la revendication 6, **caractérisé en ce que** la rampe (26) est réalisée sous forme divisée et présente une partie de transport (26.1) associée au premier courant (66) et une partie de transport (26.2) associée au deuxième courant (68).

9. Dispositif selon la revendication 1, **caractérisé en ce que** le creux en forme de puits (35) est divisé par un guidage stationnaire (36).

10. Dispositif selon la revendication 1, **caractérisé en ce que** les butées (42, 46) sont réglables sur les cotés intérieurs des coulisseaux (40, 44) tournés vers les objets (60-180) selon la longueur des objets (60-180), dans la direction de transport (12).

11. Dispositif selon la revendication 1, **caractérisé en ce que** l'angle d'inclinaison (34) d'une rampe (26), qui s'étend devant le creux en forme de puits (35), est réglable au moyen d'un actionneur (28).

12. Dispositif selon la revendication 1, **caractérisé en ce que** l'angle d'inclinaison (34) d'une rampe (26), qui s'étend devant le creux en forme de puits (35), est réglable manuellement.

13. Procédé pour former des piles (200, 300, 400) d'objets (60-180) dans un dispositif selon une ou plusieurs des revendications précédentes, comprenant les étapes de procédé suivantes:
a) diviser un flux d'objets (60-180) en un premier courant (66) et un deuxième courant (68),
b) transporter parallèlement des groupes d'objets (60, 70, 80 et 90, 100, 110) dans une direction de transport (12) jusqu'à une rampe (26), et
c) former parallèlement des piles (200, 300) à partir des groupes d'objets (60, 70, 80 et 90, 100, 110) dans le creux en forme de puits (35), qui est limité latéralement par l'écran (30) et les coulisseaux (40, 44), et l'alignement des objets (60-170) lors de la formation de piles (200, 300, 400) est effectué sur les butées (42, 46) et les coulisseaux (40, 44), dans lequel un transport des piles (200, 300, 400) dans la direction de transport (12) hors du creux en forme de puits (35) est effectué au moyen d'un dispositif de transport (38) après un mouvement de libération (62, 64) des coulisseaux mobiles (40, 44).

14. Procédé selon la revendication 13, **caractérisé en ce que** la formation des piles (200, 300) est effectuée à partir d'un groupe d'au moins deux objets (60, 70, 80, 90, 100, 110, 120, 130, 140).

15. Procédé selon la revendication 13, **caractérisé en ce que** l'empilement de piles (200, 300, 400) est effectué par la chute des objets (60-170) sur une surface de fond (38) du creux en forme de puits (35).
